# EUROPEAN PATENT APPLICATION

(11) **EP 4 700 806 A1**
(43) Date of publication of application: **25.02.2026**
(21) Application number: 24845104.9
(22) Date of filing: 27.03.2024
(51) Int. Cl.: H01F 27/245, H01F 27/32

(54) **WOUND IRON CORE AND WOUND IRON CORE TRANSFORMER**

(30) Priority: 25.07.2023 JP 2023120549
(71) Applicant: JFE Steel Corporation, Tokyo, 100-0011 (JP)
(72) Inventor: OMURA, Takeshi, Tokyo 100-0011 (JP); ICHIHARA, Yoshihisa, Tokyo 100-0011 (JP); NAKAMURA, Koji, Tokyo 100-0011 (JP)
(74) Representative: Hoffmann Eitle
(86) International application number: PCT/JP2024/012497
(87) International publication number: WO 2025/022719

(57) **Abstract**

Provided is a wound core that is excellent in inhibiting an increase in temperature around joints.

A wound core having a wound shape in which a plurality of grain-oriented electrical steel sheets are wound and stacked in the thickness direction includes a flat section and a corner section adjacent to the flat section, in which at least part of the flat section includes a joint at which end faces of each of the grain-oriented electrical steel sheets in the winding direction are butted together, the joint has a gap length of 0.10 mm or more, and the end faces have an average height Rc of 50 µm or less.

## Description

### TECHNICAL FIELD

The present invention relates to a wound core and a wound core transformer.

### Background Art

Grain-oriented electrical steel sheets have a crystal microstructure with the <001> orientation, the axis of easy magnetization of iron, highly accumulated in the rolling direction and are used for transformer cores. Transformers are broadly classified into stacked core transformers and wound core transformers based on their core structure. A stacked core transformer has a core made of stacked steel sheets cut to a predetermined shape. A wound core transformer has a core made of wound steel sheets. There are various characteristics required for transformer cores, and low iron loss is particularly important.

Low iron loss is also an important property required of grain-oriented electrical steel sheets, which are the material for the iron core. In order to reduce the exciting current in a transformer and thereby reduce copper loss, it is also necessary for such a grain-oriented electrical steel sheet used as the material to have a high magnetic flux density. Typically, a higher degree of accumulation in the Goss orientation results in a higher magnetic flux density of the grain-oriented electrical steel sheet. Grain-oriented electrical steel sheets with high magnetic flux density have small hysteresis loss and excellent iron loss characteristics. In order to reduce the iron loss of grain-oriented electrical steel sheets, it is effective to not only increase the degree of accumulation in the Goss orientation, but also to reduce impurities in the steel.

However, there are limitations to controlling the crystal orientation and reducing impurities. For this reason, a magnetic domain refining technique has been developed which is a technique for refining magnetic domains to reduce the iron loss by introducing nonuniformity into the surface of a grain-oriented electrical steel sheet by a physical method. For example, Patent Literature 1 and Patent Literature 2 describe heat-resistant magnetic domain refining methods in which linear grooves with a predetermined depth are formed on the surface of a steel sheet. Patent Literature 1 describes a method for forming grooves using a gear-type roller. Patent Literature 2 describes a method for forming grooves by etching treatment. These methods have the advantage that the magnetic domain refinement effect is not lost even when heat treatment is performed, and can be employed even when strain relief annealing is performed during core production.

In a wound core having a joint, the use of a grain-oriented electrical steel sheet in which iron loss has been reduced by the physical method described above can significantly reduce iron loss in a portion other than the joint. It is known that the joint has a very large iron loss because of the structure of the wound core, regardless of the properties of the grain-oriented electrical steel sheet used as the material. This is because the magnetic reluctance of the gap formed at the joint is so high that the magnetic flux does not pass through the gap but instead passes through adjacent steel sheets in the out-of-plane direction, leading to in-plane eddy current loss. The large iron loss at the joint is converted into thermal energy, causing an increase in temperature around the joint. The increase in temperature around the joint reduces the insulating properties of the insulating coating applied to the surface of the grain-oriented electrical steel sheet used as the material, ultimately causing dielectric breakdown. If dielectric breakdown occurs, it will result in damage of the transformer core. Therefore, a decrease in insulation performance due to the increase in temperature must be reliably prevented.

One method for inhibiting the increase in temperature around the joint is to improve the cooling capability of the core. Patent Literature 3 describes a method for winding one or more of the wound and stacked electrical steel sheets in such a manner that the sheets are offset in the width direction perpendicular to the longitudinal direction relative to the electrical steel sheets that form the other layers, over the entire longitudinal length of the sheets, thereby increasing the contact area with the cooling medium, oil or air. Another method for inhibiting the increase in temperature at the joint is to inhibit the increase in iron loss at the joint. Patent Literature 4 describes a method for dispersing the positions of joints (cutting portions) in the winding direction to reduce the magnetic flux density around the joints and inhibit an increase in iron loss. These methods can inhibit the increase in temperature around the joint to some extent. However, in order to increase the magnetic flux density and the design flexibility of, for example, iron core shape, further inhibition of the increase in temperature is required.

### Citation List

### Patent Literature

PTL 1: Japanese Examined Patent Application Publication No. 62-53579
PTL 2: Japanese Patent No. 2895670
PTL 3: International Publication No. 2022/092101
PTL 4: International Publication No. 2016/006314

### Summary of Invention

### Technical Problem

The present invention has been accomplished in view of the above circumstances, and has an object to provide a wound core that is excellent in the effect of inhibiting an increase in temperature around a joint.

### Solution to Problem

The cause of the increase in temperature around the joint of the wound core is that the magnetic reluctance of the gap formed at the joint is so high that the magnetic flux does not pass through the gap but instead passes through adjacent steel sheets in the out-of-plane direction, leading to in-plane eddy current loss. In order to inhibit the occurrence of the in-plane eddy current loss, it is very effective to eliminate the gap at the joint. However, due to errors in processing accuracy during the production of the core and in the accuracy of repeated winding, it is difficult to eliminate gaps at the joints in practice when considering productivity.

Therefore, we considered improving the cooling capability of the core by actively allowing an insulating oil, which also serves as a cooling medium, to pass through the gaps at the joints.

A wound core with two bent portions of 45° at each corner section, having a vertical length of 250 mm × a horizontal length of 250 mm × a width of 100 mm and a total weight of about 20 kg, was produced using a unicore production machine manufactured by AEM. As the material, a grain-oriented electrical steel sheet having a sheet thickness of 0.23 mm and having characteristics of magnetic flux density B8 = 1.91 T and iron loss W17/50 = 0.88 W/kg was used. Here, B8 is the magnetic flux density at a magnetizing force of 800 A/m, and W17/50 is the iron loss at a frequency of 50 Hz and a maximum magnetic flux density of 1.7 T. A step lap joining method was used for the wound core, and only the joint gap length was changed within the range of 0.01 to 20 mm. The number of stacked sheets was 200, and the number of turns of each of the primary and secondary coils was 40 turns. The excitation conditions were as follows: a frequency of 50 Hz and a magnetic flux density of 1.7 T.

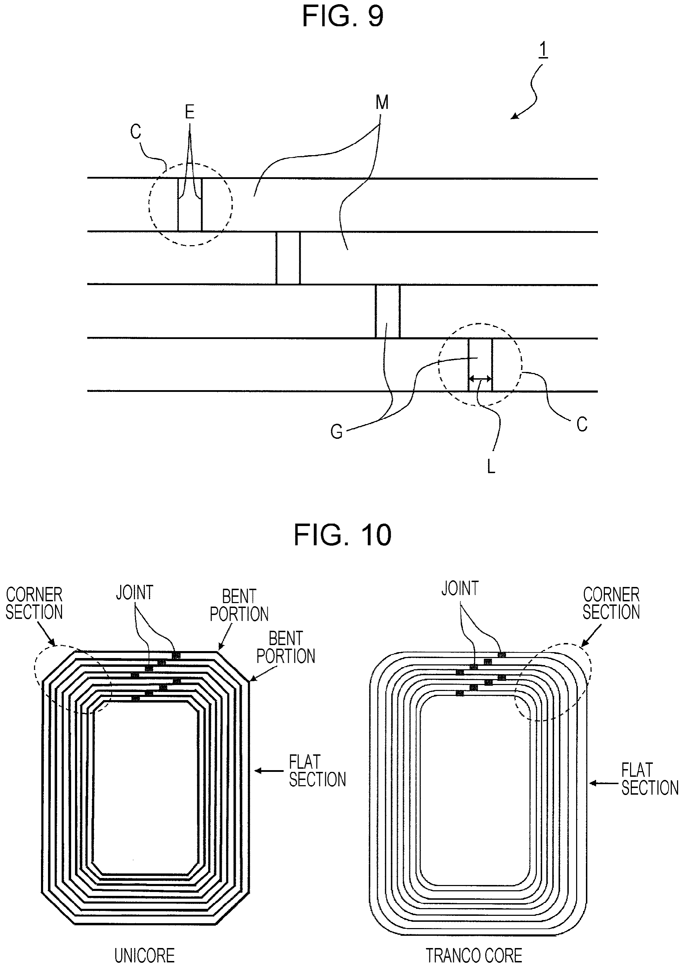

Here, the configuration of the wound core to which the present invention is applied will be described with reference to Fig. 9. As illustrated in Fig. 9, a wound core 1 is formed by winding a plurality of grain-oriented electrical steel sheets M in a layered manner in the thickness direction. When viewed from the side, the wound core 1 has a wound shape. Here, "viewed from the side" refers to a view of the wound core 1 in the width direction of the grain-oriented electrical steel sheets M that constitute the wound core 1. The wound core 1 has joints C where end faces E in the winding direction of each of the grain-oriented electrical steel sheets M (the length direction of the grain-oriented electrical steel sheets M) are butted together. At each joint C, a gap (clearance) G is formed. In the present invention, the length (distance) L of the gap G formed in the joint C is referred to as a joint gap length.

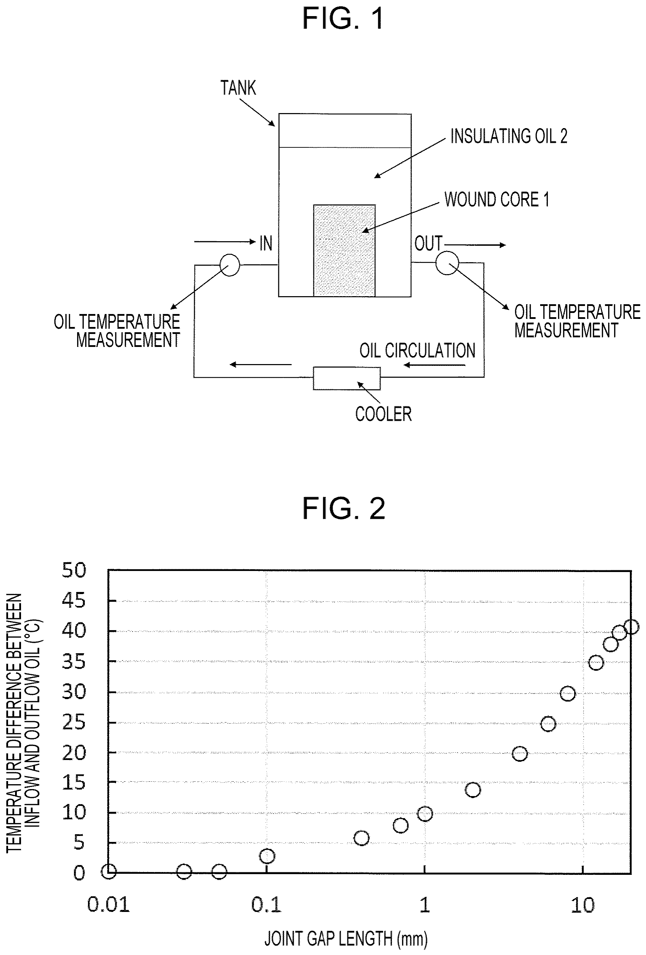

The wound core prepared above was placed in a tank of an insulating oil circulation system as illustrated in Fig. 1. The temperature of the insulating oil flowing into the tank and the temperature of the insulating oil discharged from the tank were measured when the wound core was excited under the above excitation conditions. An insulating oil with a kinematic viscosity of 40 mm²/sec at 40°C was used as the insulating oil. The insulating oil circulation system illustrated in Fig. 1 includes the wound core 1 and an insulating oil 2. The insulating oil circulation system simulates a wound core transformer including the wound core 1 and the insulating oil 2.

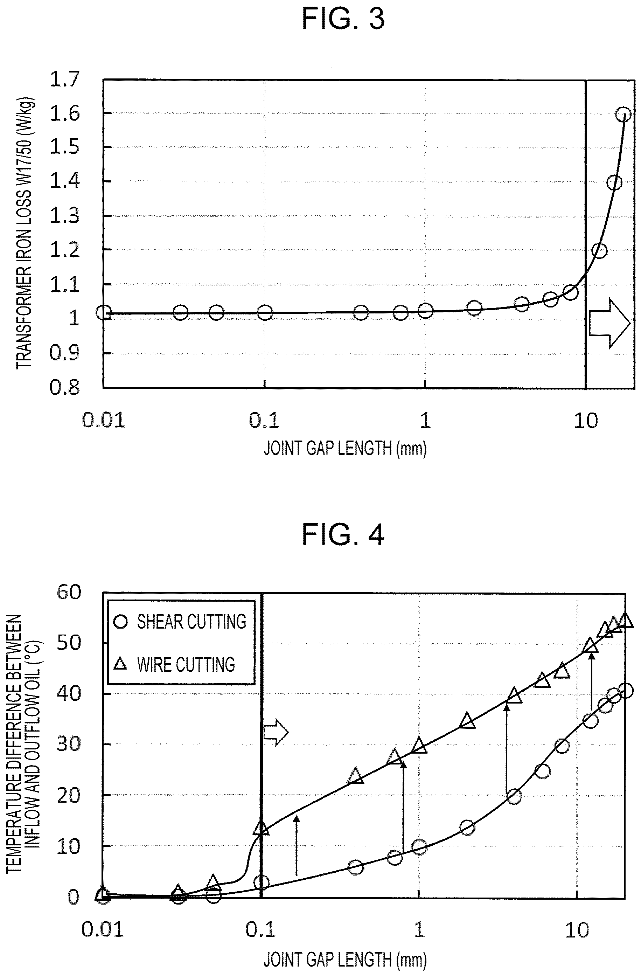

Fig. 2 illustrates the relationship between the joint gap length in the wound core and the temperature difference between the insulating oil flowing into the tank and the insulating oil discharged from the tank (hereinafter, referred to as the temperature difference between inflow and outflow oil). It was found that the temperature difference between the inflow and outflow oil increased as the joint gap length increased. Fig. 3 illustrates the relationship between the joint gap length and the iron loss of the wound core transformer when the core is excited under the above excitation conditions. It was found that the iron loss tends to increase as the joint gap length increases. In particular, when the joint gap length was 10 mm or more, the increase in iron loss was remarkable.

Since the iron loss has increased, the following two factors are considered to be the cause of the increase in the temperature difference between the inflow and outflow oil. (1) As the joint gap length increased, the iron loss at the joint increased, and the thermal energy was transferred to the insulating oil. (2) As the joint gap length increased, the insulating oil more easily passed through the gap of the joint, facilitating the transfer of thermal energy to the insulating oil (improved cooling capability). Here, in consideration of cause (2), we decided to search for a method for efficiently passing the insulating oil through the gap at the joint.

To facilitate the passage of air or liquid through pipes, it is crucial to minimize energy loss (pressure loss) as much as possible. It is believed that the unevenness of the end faces of the grain-oriented electrical steel sheets (hereinafter, also referred to simply as steel sheet end faces), which form the wall surfaces of the gaps at the joints, has an impact. Therefore, the steel sheet end faces were flattened, and the change in the temperature difference between inflow and outflow oil was investigated. Here, wire cutting was performed to flatten the steel sheet end faces. Typically, wire cutting makes it easier to obtain a flat surface than conventional shear cutting. The aforementioned grain-oriented electrical steel sheets were used as materials, and the end faces were processed by wire cutting and shear cutting, and then a wound core was prepared by the aforementioned method. The wound core was then placed in the tank of the insulating oil circulation system described above, and the relationship between the joint gap length and the temperature difference between inflow and outflow oil was investigated when the core was excited under the excitation conditions described above.

Fig. 4 illustrates the relationship between the joint gap length and the temperature difference between the inflow and outflow oil for each processing method. In the wound core manufactured using grain-oriented electrical steel sheets processed by wire cutting as the material, the temperature difference between the inflow and outflow oil increased compared to the wound core manufactured using grain-oriented electrical steel sheets processed by conventional shear cutting, particularly when the joint gap length was 0.10 mm or more.

The reason for the increase in the temperature difference between the inflow and outflow oil is thought to be that the wire cutting process reduced the unevenness of the steel sheet end faces, thereby reducing pressure loss and making it easier for the insulating oil to pass through the gap at the joint, thereby improving the cooling capability of the wound core.

Therefore, in order to improve the cooling capability of the wound core, it is sufficient to reduce the unevenness of the steel sheet end faces that form the wall surfaces of the gap at the joint and to set the joint gap length to 0.10 mm or more. Furthermore, in consideration of both the iron loss characteristics and cooling capability of the wound core, it is considered more preferable to set the joint gap length within the range of 0.10 to 10 mm.

Next, in order to clarify the relationship between the roughness of the steel sheet end faces and the temperature difference between the inflow and outflow oil, the roughness of the steel sheet end faces was changed. Here, the roughness of the steel sheet end faces was changed by adjusting the roughness of emery paper when polishing the steel sheet end faces, and the load and time during polishing. Using the above-described grain-oriented electrical steel sheets as materials, the roughness of the steel sheet end faces was changed by polishing with emery paper, and then a wound core was prepared by the above-described method. The resulting wound core was then placed in the tank of the insulating oil circulation system described above, and the relationship between the roughness of the steel sheet end faces and the temperature difference between the inflow and outflow oil was investigated when the core was excited under the excitation conditions described above. Here, the joint gap length of the wound core was set to 0.10 mm. The roughness of the steel sheet end faces was measured in the region of the sheet thickness × the total width using a 3D laser roughness meter, and the average height Rc and arithmetic mean roughness Ra were determined. In the present invention, the average height Rc and the arithmetic mean roughness Ra are values measured in accordance with JIS B 0601:2013.

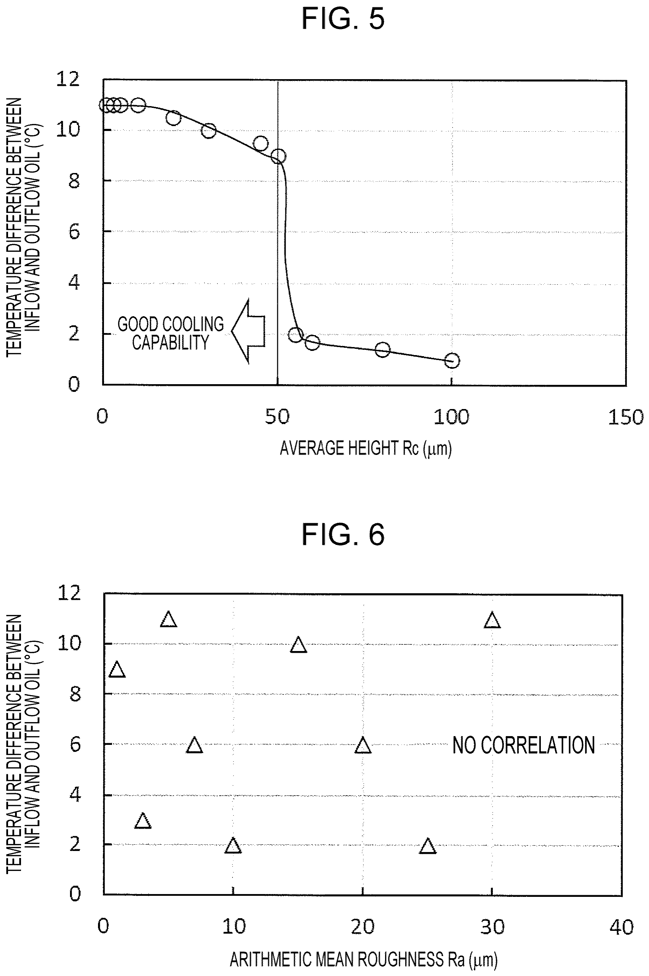

Fig. 5 illustrates the relationship between the average height Rc of the steel sheet end faces and the temperature difference between the inflow and outflow oil. When the average height Rc of the steel sheet end faces was 50 µm or less, the temperature difference between the inflow and outflow oil increased significantly, and the cooling capability was improved. Fig. 6 illustrates the relationship between the arithmetic mean roughness Ra of the steel sheet end faces and the temperature difference between the inflow and outflow oil. No correlation was found between the arithmetic mean roughness Ra of the steel sheet end faces and the temperature difference between the inflow and outflow oil. The results indicate that it is crucial to control the average height Rc of the steel sheet end faces. A tendency was observed for the average height Rc of the steel sheet end faces to correlate with the cooling capability of the wound core, whereas no such tendency was observed for the arithmetic mean roughness Ra of the steel sheet end faces. Although the reason for this is not clear, it is presumed as follows. That is, the arithmetic mean roughness Ra is the average of the absolute values of the heights of the depressions and protrusions from the reference plane, and it is less susceptible to the effects of surface flaws or foreign substances adhered during the production of the core. In contrast, the average height Rc uses the average value of the heights of each pair of adjacent depressions and protrusions, and therefore it is possible to sensitively reflect the influence of these. Pressure loss is also affected by such flaws and foreign substances adhered. Thus, it is believed that a correlation with the cooling capability of the wound core was only observed for the average height Rc of the steel sheet end faces.

It was believed that the kinematic viscosity of the insulating oil also affected the reduction of pressure loss. A wound core was produced using the grain-oriented electrical steel sheets described above as materials by the method described above. The resulting wound core was then placed in the tank of the oil circulation system described above, and excited under the excitation conditions described above. Here, the kinematic viscosity of the insulating oil at 40°C was changed in the range of 1 to 100 mm²/sec, and the relationship between the kinematic viscosity of the insulating oil and the temperature difference between the inflow and outflow oil was investigated. The joint gap length and the average height Rc of the steel sheet end faces were set to the conditions that resulted in the greatest pressure loss among those previously confirmed, specifically a joint gap length of 0.10 mm and an average height Rc of the steel sheet end faces of 50 µm.

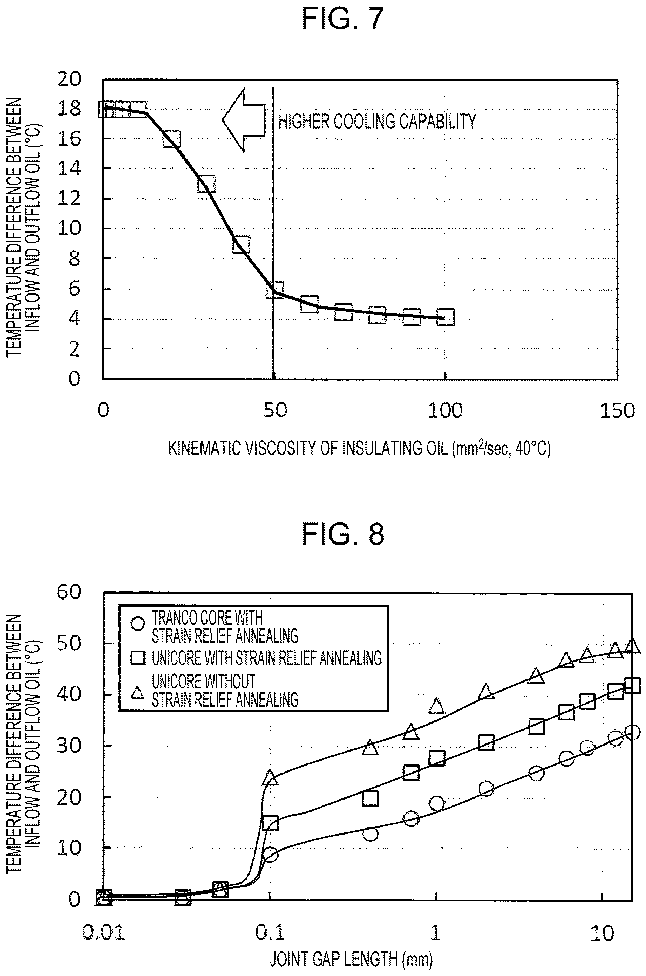

Fig. 7 indicates the relationship between the kinematic viscosity of the insulating oil and the temperature difference between the inflow and outflow oil. When the kinematic viscosity of the insulating oil at 40°C was 50 mm²/sec or less, the temperature difference between the inflow and outflow oil was larger. Therefore, it can be said that a higher cooling capability can be obtained in a wound core transformer using the insulating oil with a kinematic viscosity of 50 mm²/sec or less at 40°C. The kinematic viscosity of the insulating oil is more preferably 10 mm²/sec or less, at which point the temperature difference between the inflow and outflow oil is saturated.

There are two methods for producing wound cores: a method in which steel sheets are wound and stacked and then pressed in such a manner that the corner sections have a predetermined curvature, thereby forming a rectangular shape; and a method in which portions to be the corner sections are formed by stacking steel sheets that have been subjected to bending in advance. Those produced by the former method are called tranco cores, and those produced by the latter method are called unicores or duocores. Fig. 10 illustrates schematic views of a unicore and a tranco core. Here, the cooling capabilities of the cores in wound core transformers using the unicore and the tranco core are compared.

Regarding the unicore, a unicore production machine manufactured by AEM was used to produce two unicores each having two 45° bent portions at each corner section and each having a vertical length of 500 mm × a horizontal length of 500 mm × a width of 100 mm and a total weight of about 100 kg. One of them was subjected to strain relief annealing under the conditions of 825°C × 3 hours in a DX gas atmosphere, and the other was not subjected to strain relief annealing. Regarding the tranco core, after winding was performed around a mandrel to reach dimensions of a vertical length of 500 mm × a horizontal length of 500 mm × a width of 100 mm, and a total weight of about 100 kg, pressing was performed, and strain relief annealing was performed under the same conditions as those used for the unicores that were subjected to strain relief annealing. As the materials, grain-oriented electrical steel sheets subjected to heat-resistant magnetic domain refining treatment were used, the steel sheets each having a sheet thickness of 0.23 mm and having characteristics of B8 = 1.93 T and W17/50 = 0.75 W/kg. A step lap joining method was used for the wound core, the joint gap length was changed in the range of 0.01 to 15 mm, and the processing conditions were adjusted in such a manner that the average height Rc of the steel sheet end faces was 30 µm. The number of stacked sheets was 500, and the number of turns of the primary coil and the number of turns of the secondary coil were each 40. The excitation conditions were as follows: a frequency of 60 Hz and a magnetic flux density of 1.7 T. The resulting wound core was placed in the tank of an oil circulation system using the insulating oil with a kinematic viscosity of 5 mm²/sec at 40°C, as illustrated in Fig. 1. The temperature of oil flowing into the tank and the temperature of the oil discharged from the tank were measured when the core was excited under the above excitation conditions.

Fig. 8 illustrates the relationship between the joint gap length in each wound core and the temperature difference between the inflow and outflow oil. The unicores each had a larger temperature difference between the inflow and outflow oil than the tranco core. Among the unicores, the temperature difference between the inflow and outflow oil was larger when strain relief annealing was not performed, compared to when strain relief annealing was performed. The reason for this is thought to be as follows: In the unicores, large strains are introduced locally. Thus, even after strain relief annealing, deformation twins and the like remain, and the magnetic permeability in the winding direction is lower than that of the tranco core. Therefore, it is thought that the amount of magnetic flux passing through the adjacent steel sheets in the out-of-plane direction increases around the joint, resulting in an increase in iron loss around the joint. When strain relief annealing was not performed, the magnetic permeability in the winding direction was lower, and therefore the amount of magnetic flux passing through adjacent steel sheets in the out-of-plane direction was thought to be the largest among the three conditions, and as a result, the temperature difference between the inflow and outflow oil was thought to be the largest. From the above results, it can be said that a wound core transformer using a unicore or duocore with bent portions at the corner sections can achieve higher cooling capability.

The present invention is based on the above findings, and the gist of the present invention is as described below.
[1] A wound core having a wound shape in which a plurality of grain-oriented electrical steel sheets are wound and stacked in the thickness direction includes a flat section and a corner section adjacent to the flat section, in which at least part of the flat section includes a joint at which end faces of each of the grain-oriented electrical steel sheets in the winding direction are butted together, the joint has a gap length of 0.10 mm or more, and the end faces have an average height Rc of 50 µm or less.
[2] In the wound core described in [1], the corner section has a bent portion.
[3] A wound core transformer includes the wound core described in [1] or [2], and an insulating oil.
[4] In the wound core transformer described in [3], the insulating oil has a kinematic viscosity of 50 mm²/sec or less at 40°C.

### Advantageous Effects of Invention

According to the present invention, it is possible to provide the wound core that is excellent in the effect of inhibiting an increase in temperature around the joints.

According to the present invention, it is possible to effectively inhibit the increase in temperatures near the joints of the wound core, and to inhibit the deterioration of the insulating properties of the insulating coating due to the temperature increase, thereby increasing the design flexibility of the transformer, such as increasing the design magnetic flux density of the transformer or achieving miniaturization.

### Brief Description of Drawings

[Fig. 1] Fig. 1 is a schematic view of an insulating oil circulation system used in experiments.
[Fig. 2] Fig. 2 illustrates the relationship between the joint gap length and the temperature difference between inflow and outflow oil.
[Fig. 3] Fig. 3 illustrates the relationship between the joint gap length and the transformer iron loss W17/50.
[Fig. 4] Fig. 4 illustrates the relationship between the joint gap length and the temperature difference between inflow and outflow oil in each wound core produced using grain-oriented electrical steel sheets processed by wire cutting and shear cutting as a material.
[Fig. 5] Fig. 5 illustrates the relationship between the average height Rc of steel sheet end faces and the temperature difference between inflow and outflow oil.
[Fig. 6] Fig. 6 illustrates the relationship between the arithmetic mean roughness Ra of steel sheet end faces and the temperature difference between inflow and outflow oil.
[Fig. 7] Fig. 7 illustrates the relationship between the kinematic viscosity of an insulating oil at 40°C and the temperature difference between inflow and outflow oil.
[Fig. 8] Fig. 8 illustrates the relationships between the joint gap lengths and the temperature differences between inflow and outflow oil when unicores and a tranco core are used.
[Fig. 9] Fig. 9 is a schematic view illustrating the configuration of a wound core.
[Fig. 10] Fig. 10 is a set of schematic views (side views) illustrating a unicore and a tranco core.
[Fig. 11] Fig. 11 is a schematic view illustrating a position where a thermocouple was attached (temperature measurement position) in examples.

### Description of Embodiments

As described above, in order to effectively inhibit an increase in temperature around the joints of a core, the following requirements need to be satisfied.

### <Wound Core>

[A] A wound core has a wound shape in which a plurality of grain-oriented electrical steel sheets are wound and stacked in the thickness direction, a flat section, and a corner section adjacent to the flat section.
[B] At least part of the flat section includes a joint at which end faces of each of the grain-oriented electrical steel sheets in the winding direction are butted together, and the joint has a gap length of 0.10 mm or more, preferably 0.10 mm to 10 mm.
[C] The end faces have an average height Rc of 50 µm or less, preferably 10 µm or less.

A method for producing the wound core is not particularly limited, and for example, a known method can be used. More specifically, a unicore or duocore with a bent portion at a corner section can be produced using a unicore production machine manufactured by AEM. In this case, when the design drawing is loaded into the production machine, processed steel sheets that have been sheared and bent are produced one by one in accordance with the dimensions specified in the design drawing. These processed steel sheets (materials) can be wound and stacked in the thickness direction to produce the above-described wound core. After the wound core is produced, strain relief annealing may or may not be performed.

On the other hand, the tranco core, which has a curved portion at a corner section, is produced as follows: A coiled grain-oriented electrical steel sheet is discharged and cut into strips for individual turns. These strips are wound and stacked onto a circular winding mandrel in the thickness direction. Thereafter, the wound and stacked core materials are pressed with forming dies placed on the inside and outside thereof to form the desired wound shape, and then strain relief annealing is performed.

In either production method, there is no particular limitation on a method for controlling the joint gap length. For example, when the grain-oriented electrical steel sheet material is sheared for one turn, the joint gap length can be controlled within the range of the present invention by setting the length in the winding direction slightly shorter than the designed length of one turn. The joint gap length can also be controlled within the range of the present invention by adjusting the binding force or tightening force of a binding band or tightening jigs that integrally fix the wound and stacked grain-oriented electrical steel sheets. As described above, in the present invention, the joint gap length is set to 0.10 mm or more. The joint gap length is preferably 0.50 mm or more. The joint gap length is preferably 20 mm or less, more preferably 15 mm or less, still more preferably 10 mm or less, and still even more preferably 5 mm or less.

A method for controlling the average height Rc of the steel sheet end faces is not particularly limited. For example, in the case of shearing, which is a common processing method, the average height Rc of the steel sheet end faces can be controlled within the range of the present invention by a method, such as adjusting the clearance, adjusting the surface roughness of the shear blade, or brush grinding after shearing. In the case of processing using a laser beam or the like, the average height Rc of the steel sheet end faces can be controlled within the range of the present invention by a method, such as adjusting the thermal energy introduced into the steel sheets by changing the laser output or scanning speed. It is preferable to incorporate a step of measuring the average height Rc of the steel sheet end faces into the process of producing the wound core. As described above, in the present invention, the average height Rc of the steel sheet end faces is set to 50 µm or less. The average height Rc of the steel sheet end faces is preferably 25 µm or less, more preferably 10 µm or less, and still more preferably 5 µm or less. The lower limit of the average height Rc of the steel sheet end faces is not particularly limited. As an example, the average height Rc of the steel sheet end faces is 0.5 µm or more.

In the present invention, in the case of producing a wound core, as long as the joint gap length and the average height Rc of the steel sheet end faces are controlled within the ranges of the present invention, there are no particular limitations on the core structure, such as the core size and joining method. When the wound core has bent portions at the corner sections, the core structure, such as the bending angle of the bent portions at the corner sections and the number of bent portions, is not particularly limited.

As an example, the method for manufacturing a wound core of the present invention can include the steps of measuring the average height Rc of the end faces of grain-oriented electrical steel sheets, preparing, as materials, a plurality of grain-oriented electrical steel sheets each having end faces that have an average height Rc within the range of the present invention, and winding and stacking the grain-oriented electrical steel sheets prepared as materials in the step above to thereby form a wound core. In the step of forming the wound core, the joint gap length is controlled within the range of the present invention, for example, as described above.

### <Grain-Oriented Electrical Steel Sheet>

In the present invention, the grain-oriented electrical steel sheet used as the material for the wound core is not particularly limited. The sheet thickness of the grain-oriented electrical steel sheet may be selected appropriately in accordance with the application. The sheet thickness can be, for example, 0.15 mm or more, and may be 0.18 mm or more. The sheet thickness can be, for example, 0.35 mm or less, and may be 0.27 mm or less. The sheet thickness can be, for example, in the range of 0.15 to 0.35 mm, and may be in the range of 0.18 to 0.27 mm.

There are no particular limitations on a method for producing the grain-oriented electrical steel sheet. For example, a slab having a known chemical composition is heated at 1,150°C to 1,450°C and subjected to hot rolling. If necessary, the resulting hot-rolled steel sheet is then subjected to annealing at 900°C to 1,150°C. Afterwards, cold rolling is performed once or twice or more with intermediate annealing in between. Decarburization annealing is performed at 700°C to 900°C in a wet hydrogen atmosphere. If necessary, nitriding treatment is further performed. Thereafter, an annealing separator is applied, and finish annealing is performed at 1,000°C to 1,200°C, and an insulating coating is formed at about 900°C. As an example, the grain-oriented electrical steel sheet can be produced by the above method. It is also possible to subject a grain-oriented electrical steel sheet to magnetic domain refining treatment using distortions, grooves, or the like by a known method. When strain relief annealing is performed during the production of a wound core, it is preferable to perform groove-type magnetic domain refining treatment.

### <Wound Core Transformer>

The wound core transformer of the present invention includes the wound core and an insulating oil. As described above, the insulating oil preferably has a kinematic viscosity of 50 mm²/sec or less at 40°C. The insulating oil more preferably has a kinematic viscosity of 10 mm²/sec or less at 40°C. While there is no specific lower limit for the kinematic viscosity, the kinematic viscosity is 1 mm²/sec or higher.

### EXAMPLES

The present invention will be specifically described based on examples. The following examples merely illustrate preferred embodiments of the present invention, and the present invention is not limited in any way by these examples. The embodiments of the present invention can be varied as appropriate within the scope of the spirit of the present invention, and all such variations are included within the technical scope of the present invention.

### [Example 1]

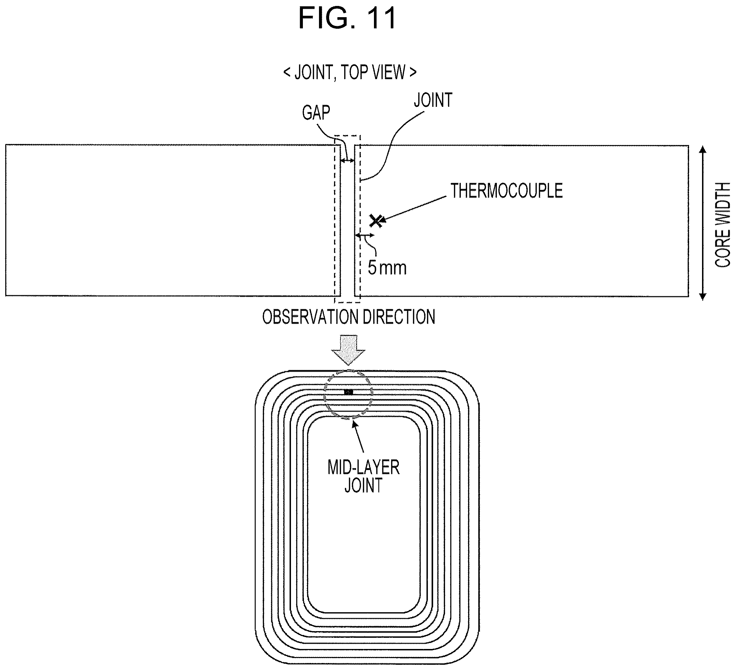

A wound core with a weight of about 40 kg and a capacity of 30 kVA was produced using a 0.23-mm-thick grain-oriented electrical steel sheet (heat-resistant magnetic domain refined material) having grooves formed on the surface of the steel sheet and having magnetic properties of B8 = 1.88 T and W17/50 = 0.68 W/kg. The wound core was produced as follows: The coil-shaped grain-oriented electrical steel sheet was discharged and cut into individual turns, and then wound around a circular winding mandrel. Here, the steel sheet was cut to a length 0.03 to 13.00 mm shorter than the designed circumferential length, resulting in various joint gap lengths. The cutting was performed using a laser. Regarding the laser processing conditions, a single-mode fiber laser was used, and the deflection speed was 10 m/sec. The laser output was changed within a range of 0.5 to 10.0 kW to thereby result in various average heights Rc of the steel sheet end faces. The steel sheet was then wound, and the core materials wound and stacked in the thickness direction were pressed with forming dies placed on the inside and outside thereof to form a final wound shape. Strain relief annealing was performed at 800°C for 3 hours in a N₂ gas atmosphere to form a wound core. Table 1 presents the difference between the designed circumferential length and the actual cutting length, the joint gap length of each wound core, the laser output, and the average height Rc of the steel sheet end faces constituting the joint of each wound core. After that, the wound core was loosened, and the coil was installed, and at the same time, a thermocouple was attached around the joint to measure the temperature around the joint. The thermocouple was attached at the center in the width direction of the mid-layer joint of the wound core (the joint at the center of the thickness of the wound core), at a position 5 mm from the end face of the steel sheet constituting the joint (see Fig. 11). After the coil was installed, the wound core was placed in the tank, and an insulating oil was placed thereinto, thereby providing a wound core transformer. At this time, different insulating oils were used to change the kinematic viscosity of the insulating oil. Table 1 also presents the kinematic viscosity of the insulating oil, the transformer loss, and the temperature around the joint. The transformer was excited at 50 Hz and 1.7 T. The transformer loss and the temperature around the joint were measured after the temperature of the insulating oil was monitored and became stable (i.e., after thermal equilibrium had been achieved).

In Nos. 1 to 12, the joint gap length was short and outside the range of the present invention; thus, the temperature around the joint was high under all conditions. The reason why the average height Rc of the steel sheet end faces changed in accordance with the laser output is thought to be that when the output increases, the amount of melt at the steel sheet end faces, which is the laser-processed surfaces, increases, and the molten material scatters and adheres to the processed surfaces again. For Nos. 13 to 24 and Nos. 25 to 36, it can be seen that when the average height Rc of the steel sheet end faces is within the range of the present invention, the increase in temperature around the joint is inhibited compared to when it is outside the range of the present invention. Furthermore, it can be seen that a lower average height Rc of the steel sheet end faces and a lower kinematic viscosity of the insulating oil result in a lower temperature around the joint, indicating a higher cooling capability. Moreover, it is clear that the increase in transformer loss due to an increase in the joint gap length is kept to a minimum, indicating that both transformer characteristics and cooling capability have been achieved. For Nos. 37 to 48, the transformer losses are inferior to those of Nos. 13 to 36 because of the larger joint gap length. However, it can be seen that when the average height Rc of the steel sheet end faces is within the range of the present invention, the increase in temperature around the joint is sufficiently inhibited, and the object of the present invention can be achieved.

**[Table 1]**

| No. | Designed circumferential length - actual cutting length (mm) | Joint gap length (mm) | Laser output (kW) | Average height Rc of the steel sheet end faces (µm) | Kinematic viscosity of insulating oil (mm²/sec 40°C) | Transformer loss (W) | Temperature around joint (°C) | Remarks |
|---|---|---|---|---|---|---|---|---|
| 1 | 0.03 | 0.05 | 0.5 | 3 | 5 | 33 | 140 | Comparative Example |
| 2 | | | 0.5 | 3 | 20 | 33 | 140 | Comparative Example |
| 3 | | | 0.5 | 3 | 75 | 33 | 140 | Comparative Example |
| 4 | | | 3.0 | 8 | 5 | 33 | 140 | Comparative Example |
| 5 | | | 3.0 | 8 | 20 | 33 | 140 | Comparative Example |
| 6 | | | 3.0 | 8 | 75 | 33 | 140 | Comparative Example |
| 7 | | | 7.0 | 20 | 5 | 33 | 140 | Comparative Example |
| 8 | | | 7.0 | 20 | 20 | 33 | 140 | Comparative Example |
| 9 | | | 7.0 | 20 | 75 | 33 | 140 | Comparative Example |
| 10 | | | 10.0 | 70 | 5 | 33 | 140 | Comparative Example |
| 11 | | | 10.0 | 70 | 20 | 33 | 140 | Comparative Example |
| 12 | | | 10.0 | 70 | 75 | 33 | 140 | Comparative Example |
| 13 | 0.30 | 0.50 | 0.5 | 3 | 5 | 34 | 50 | Example |
| 14 | | | 0.5 | 3 | 20 | 34 | 55 | Example |
| 15 | | | 0.5 | 3 | 75 | 34 | 100 | Example |
| 16 | | | 3.0 | 8 | 5 | 34 | 50 | Example |
| 17 | | | 3.0 | 8 | 20 | 34 | 55 | Example |
| 18 | | | 3.0 | 8 | 75 | 34 | 100 | Example |
| 19 | | | 7.0 | 20 | 5 | 34 | 60 | Example |
| 20 | | | 7.0 | 20 | 20 | 34 | 65 | Example |
| 21 | | | 7.0 | 20 | 75 | 34 | 100 | Example |
| 22 | | | 10.0 | 70 | 5 | 34 | 160 | Comparative Example |
| 23 | | | 10.0 | 70 | 20 | 34 | 160 | Comparative Example |
| 24 | | | 10.0 | 70 | 75 | 34 | 160 | Comparative Example |
| 25 | 4.50 | 5.00 | 0.5 | 3 | 5 | 35 | 55 | Example |
| 26 | | | 0.5 | 3 | 20 | 35 | 60 | Example |
| 27 | | | 0.5 | 3 | 75 | 35 | 100 | Example |
| 28 | | | 3.0 | 8 | 5 | 35 | 55 | Example |
| 29 | | | 3.0 | 8 | 20 | 35 | 60 | Example |
| 30 | | | 3.0 | 8 | 75 | 35 | 100 | Example |
| 31 | | | 7.0 | 20 | 5 | 35 | 65 | Example |
| 32 | | | 7.0 | 20 | 20 | 35 | 70 | Example |
| 33 | | | 7.0 | 20 | 75 | 35 | 100 | Example |
| 34 | | | 10.0 | 70 | 5 | 35 | 170 | Comparative Example |
| 35 | | | 10.0 | 70 | 20 | 35 | 170 | Comparative Example |
| 36 | | | 10.0 | 70 | 75 | 35 | 170 | Comparative Example |
| 37 | 13.00 | 15.00 | 0.5 | 3 | 5 | 42 | 70 | Example |
| 38 | | | 0.5 | 3 | 20 | 42 | 75 | Example |
| 39 | | | 0.5 | 3 | 75 | 42 | 120 | Example |
| 40 | | | 3.0 | 8 | 5 | 42 | 70 | Example |
| 41 | | | 3.0 | 8 | 20 | 42 | 75 | Example |
| 42 | | | 3.0 | 8 | 75 | 42 | 120 | Example |
| 43 | | | 7.0 | 20 | 5 | 42 | 80 | Example |
| 44 | | | 7.0 | 20 | 20 | 42 | 85 | Example |
| 45 | | | 7.0 | 20 | 75 | 42 | 120 | Example |
| 46 | | | 10.0 | 70 | 5 | 42 | 200 | Comparative Example |
| 47 | | | 10.0 | 70 | 20 | 42 | 200 | Comparative Example |
| 48 | | | 10.0 | 70 | 75 | 42 | 200 | Comparative Example |

### [Example 2]

A wound core with a weight of about 500 kg and a capacity of 500 kVA was prepared using a 0.30-mm-thick grain-oriented electrical steel sheet having magnetic properties of B8 = 1.93 T and W17/50 = 1.05 W/kg. The wound core was produced as follows: A unicore production machine manufactured by AEM was used. The steel sheet was sheared to the designed circumferential length by shearing. Portions serving as corner sections were subjected to bending processing. The resulting sheets were wound in the thickness direction to produce a wound core having a wound shape. Here, the wound core was shaped to have two 45°-bent portions at each corner section. The average height Rc of the steel sheet end faces was changed by changing the clearance during shearing. Thereafter, the iron core was loosened, and the coil was installed. Then a binding band was used to integrally fix the wound and stacked grain-oriented electrical steel sheets. The tightening pressure of the binding band was changed in the range of 0.01 to 1.00 kg/mm² to vary the joint gap length. The core was loosened, and the coil was installed. At the same time, a thermocouple was attached around the joint, and the temperature around the joint was measured, in the same manner as in Example 1. After the coil was installed, the wound core was placed in the tank, and an insulating oil was placed thereinto, thereby providing a wound core transformer. At this time, different insulating oils were used to change the kinematic viscosity. Table 2 presents the tightening pressure of the binding band, the joint gap length, the clearance during shearing, the average height Rc of the steel sheet end faces, the kinematic viscosity of the insulating oil, the transformer loss, and the temperature around the joint. Here, the transformer was excited in the same manner as in Example 1, and the transformer loss and the temperature around the joint were measured.

In Nos. 37 to 48, the joint gap length was short and outside the range of the present invention; thus, the temperature around the joint was high under all conditions. For Nos. 13 to 24 and Nos. 25 to 36, it can be seen that when the average height Rc of the steel sheet end faces is within the range of the present invention, the increase in temperature around the joint is inhibited compared to when it is outside the range of the present invention. Furthermore, it can be seen that a lower average height Rc of the steel sheet end faces and a lower kinematic viscosity of the insulating oil result in a lower temperature around the joint, indicating a higher cooling capability. Moreover, it is clear that the increase in transformer loss due to an increase in the joint gap length is kept to a minimum, indicating that both transformer characteristics and cooling capability have been achieved. For Nos. 1 to 12, the transformer losses are inferior to those of Nos. 13 to 36 because of the larger joint gap length. However, it can be seen that when the average height Rc of the steel sheet end faces is within the range of the present invention, the increase in temperature around the joint is sufficiently inhibited, and the object of the present invention can be achieved.

**[Table 2]**

| No. | Tightening pressure of binding band (kg/mm²) | Joint gap length (mm) | Clearance during shear processing (mm) | Average height Rc of the steel sheet end faces (µm) | Kinematic viscosity of insulating oil (mm²/sec 40°C) | Transformer loss (W) | Temperature around joint (°C) | Remarks |
|---|---|---|---|---|---|---|---|---|
| 1 | 0.01 | 12.00 | 0.003 | 3 | 5 | 750 | 90 | Example |
| 2 | | | 0.003 | 3 | 20 | 750 | 95 | Example |
| 3 | | | 0.003 | 3 | 75 | 750 | 140 | Example |
| 4 | | | 0.030 | 8 | 5 | 750 | 90 | Example |
| 5 | | | 0.030 | 8 | 20 | 750 | 95 | Example |
| 6 | | | 0.030 | 8 | 75 | 750 | 140 | Example |
| 7 | | | 0.150 | 20 | 5 | 750 | 100 | Example |
| 8 | | | 0.150 | 20 | 20 | 750 | 105 | Example |
| 9 | | | 0.150 | 20 | 75 | 750 | 140 | Example |
| 10 | | | 0.300 | 70 | 5 | 750 | 230 | Comparative Example |
| 11 | | | 0.300 | 70 | 20 | 750 | 230 | Comparative Example |
| 12 | | | 0.300 | 70 | 75 | 750 | 230 | Comparative Example |
| 13 | 0.20 | 2.00 | 0.003 | 3 | 5 | 620 | 75 | Example |
| 14 | | | 0.003 | 3 | 20 | 620 | 80 | Example |
| 15 | | | 0.003 | 3 | 75 | 620 | 140 | Example |
| 16 | | | 0.030 | 8 | 5 | 620 | 75 | Example |
| 17 | | | 0.030 | 8 | 20 | 620 | 80 | Example |
| 18 | | | 0.030 | 8 | 75 | 620 | 140 | Example |
| 19 | | | 0.150 | 20 | 5 | 620 | 85 | Example |
| 20 | | | 0.150 | 20 | 20 | 620 | 90 | Example |
| 21 | | | 0.150 | 20 | 75 | 620 | 140 | Example |
| 22 | | | 0.300 | 70 | 5 | 620 | 200 | Comparative Example |
| 23 | | | 0.300 | 70 | 20 | 620 | 200 | Comparative Example |
| 24 | | | 0.300 | 70 | 75 | 620 | 200 | Comparative Example |
| 25 | 0.50 | 0.20 | 0.003 | 3 | 5 | 610 | 70 | Example |
| 26 | | | 0.003 | 3 | 20 | 610 | 75 | Example |
| 27 | | | 0.003 | 3 | 75 | 610 | 140 | Example |
| 28 | | | 0.030 | 8 | 5 | 610 | 70 | Example |
| 29 | | | 0.030 | 8 | 20 | 610 | 75 | Example |
| 30 | | | 0.030 | 8 | 75 | 610 | 140 | Example |
| 31 | | | 0.150 | 20 | 5 | 610 | 80 | Example |
| 32 | | | 0.150 | 20 | 20 | 610 | 85 | Example |
| 33 | | | 0.150 | 20 | 75 | 610 | 140 | Example |
| 34 | | | 0.300 | 70 | 5 | 610 | 190 | Comparative Example |
| 35 | | | 0.300 | 70 | 20 | 610 | 190 | Comparative Example |
| 36 | | | 0.300 | 70 | 75 | 610 | 190 | Comparative Example |
| 37 | 1.00 | 0.05 | 0.003 | 3 | 5 | 600 | 170 | Comparative Example |
| 38 | | | 0.003 | 3 | 20 | 600 | 170 | Comparative Example |
| 39 | | | 0.003 | 3 | 75 | 600 | 170 | Comparative Example |
| 40 | | | 0.030 | 8 | 5 | 600 | 170 | Comparative Example |
| 41 | | | 0.030 | 8 | 20 | 600 | 170 | Comparative Example |
| 42 | | | 0.030 | 8 | 75 | 600 | 170 | Comparative Example |
| 43 | | | 0.150 | 20 | 5 | 600 | 170 | Comparative Example |
| 44 | | | 0.150 | 20 | 20 | 600 | 170 | Comparative Example |
| 45 | | | 0.150 | 20 | 75 | 600 | 170 | Comparative Example |
| 46 | | | 0.300 | 70 | 5 | 600 | 170 | Comparative Example |
| 47 | | | 0.300 | 70 | 20 | 600 | 170 | Comparative Example |
| 48 | | | 0.300 | 70 | 75 | 600 | 170 | Comparative Example |

## Claims

1. A wound core having a wound shape in which a plurality of grain-oriented electrical steel sheets are wound and stacked in the thickness direction, the wound core comprising a flat section and a corner section adjacent to the flat section,
wherein at least part of the flat section includes a joint at which end faces of each of the grain-oriented electrical steel sheets in a winding direction are butted together, the joint has a gap length of 0.10 mm or more, and the end faces have an average height Rc of 50 µm or less.

2. The wound core according to claim 1, wherein the corner section has a bent portion.

3. A wound core transformer, comprising the wound core according to claim 1 or 2, and an insulating oil.

4. The wound core transformer according to claim 3, wherein the insulating oil has a kinematic viscosity of 50 mm²/sec or less at 40°C.
